# EUROPÄISCHE PATENTSCHRIFT

(11) **EP 2 273 047 B1**
(45) Veröffentlichungstag und Bekanntmachung des Hinweises auf die Patenterteilung: **23.05.2018**
(21) Anmeldenummer: 10168668.1
(22) Anmeldetag: 07.07.2010
(51) Int. Cl.: E05C 9/20, F16B 21/08, E05C 9/22

(54) **Treibstange mit einem Verbindungselement**
Drive rod with a connection element
Tige d'actionnement avec un élément de liaison

(30) Priorität: 08.07.2009 AT 42109 U
(43) Veröffentlichungstag der Anmeldung: 12.01.2011
(73) Patentinhaber: ROTO FRANK AG, 70771 Leinfelden-Echterdingen (DE)
(72) Erfinder: Riznik, Peter, 8430, Tillmitsch (AT); Schmidt, Andreas, 8591, Gößnitz (AT)
(74) Vertreter: Müllner, Martin

(56) Entgegenhaltungen:
- EP-A2- 1 304 438
- WO-A1-02/35105
- DE-A1- 2 515 990
- DE-U- 7 309 253
- US-A1- 2004 244 158

## Beschreibung

### Technisches Gebiet

Die Erfindung betrifft eine Treibstange mit einem Verbindungselement gemäß dem Oberbegriff des Anspruchs 1.

### Stand der Technik

Derartige Verbindungselemente werden nach dem Stand der Technik aus Metall als Druckgussteile hergestellt (z.B. als Zinkdruckgussteile). Diese werden mit der Treibstange eines Riegelbeschlages z.B. für ein Fenster verbunden, indem die Zapfen in entsprechende Bohrungen der Treibstange gesteckt und dort verpresst werden. Dies kann jedoch praktisch nur werkseitig, nicht aber bei den Verarbeitern (Türen- und Fensterherstellern) erfolgen. Damit sind aber eine Anpassung und ein Ausgleich von Toleranzen praktisch nicht möglich. Außerdem kommt aufgrund der anzuwendenden hohen Kräfte im Gebrauch nur Metall zur Herstellung des Verbindungselementes in Frage, wodurch sich ein entsprechend hoher Herstellungsaufwand für das Verbindungselement ergibt.

### Darstellung der Erfindung

Ziel der Erfindung ist es, diese Nachteile zu vermeiden und ein Verbindungselement der eingangs erwähnten Art vorzuschlagen, das sich einfach herstellen lässt und eine sichere und beständige Verbindung gewährleistet und auch eine Anpassung bei der Montage ermöglicht.

Erfindungsgemäß wird dies durch die kennzeichnenden Merkmale des Anspruchs 1 erreicht.

Durch die vorgeschlagenen Maßnahmen ist sichergestellt, dass die Zapfen die auftretenden Schubkräfte aufnehmen und auf das Verbindungselement übertragen, wobei die geschlitzten Befestigungszapfen Zugkräfte aufnehmen, um ein Abheben des Verbindungselements von der Treibstange zu verhindern. Bei der erfindungsgemäßen Lösung genügt es, das Verbindungselement bzw. die Zapfen und Befestigungszapfen in entsprechende Bohrungen der Treibstange einzusetzen, wobei sich durch die Befestigungszapfen eine Schnappverbindung mit der Treibstange ergibt. Damit ist eine sehr einfache Montage sichergestellt. Das weitere in die Innenverzahnung einzusetzende Element (z.B. ein Riegel oder eine Verlängerung für die Treibstange), das eine entsprechende Außenverzahnung aufweist, kann innerhalb des Verbindungselementes in einem bestimmten Ausmaß verschoben eingesetzt werden, wodurch auf einfache Weise eine Anpassung bzw. ein Ausgleich für Toleranzen bei der Montage erfolgen kann.

Es ist dabei günstig, dass die Befestigungszapfen außen und die Zapfen innen liegen, weil dadurch ein teilweises Abheben des Verbindungselements von der Treibstange weitgehend verhindert wird.

Nach einem weiteren Merkmal kann das Verbindungselement aus Kunststoff hergestellt werden. Dies ist vor allem dadurch möglich, dass die Schubkräfte durch die Zapfen übertragen werden, wobei durch die Anordnung zumindest zweier Zapfen eine sichere Festlegung der Lage gegenüber der Schubstange gegeben ist.

Durch die Merkmale des Anspruchs 3 ist sichergestellt, dass die Befestigungszapfen gegebenenfalls zusätzlich Schubkräfte aufnehmen können, weil sie in Längsrichtung der Treibstange kaum elastisch verformbar sind, sondern nur in Querrichtung. In Querrichtung treten aber nur sehr geringe Kräfte auf, die durch die Zapfen leicht aufgenommen werden können.

### Kurze Beschreibung der Abbildungen der Zeichnungen

Die Erfindung wird nun anhand der Zeichnungen näher erläutert. Dabei zeigen:

Fig. 1 und 2 Ansichten von hinten eines Beschlags mit erfindungsgemäßen Verbindungselementen;
Fig. 3 eine Ansicht von oben auf den Beschlag nach der Fig. 2;
Fig. 4 eine Darstellung der wesentlichen Teile des Beschlags nach den Fig. 1 bis 3;
Fig. 5 eine Treibstange für einen Beschlag nach einer der Fig. 1 bis 3;
Fig. 6 und 7 ein erfindungsgemäßes Verbindungselement;
Fig. 8 und 9 einen Verbinder zur Verbindung zweier Teile eines Stulps;
Fig. 10 und 11 einen Dübel zur Befestigung des Verbinders nach den Fig. 8 und 9;
Fig. 12 und 13 eine Aufnahme für einen Verbinder; und
Fig. 14 und 15 schematisch die Anwendung des Verbinders.

### Bester Weg zur Ausführung der Erfindung

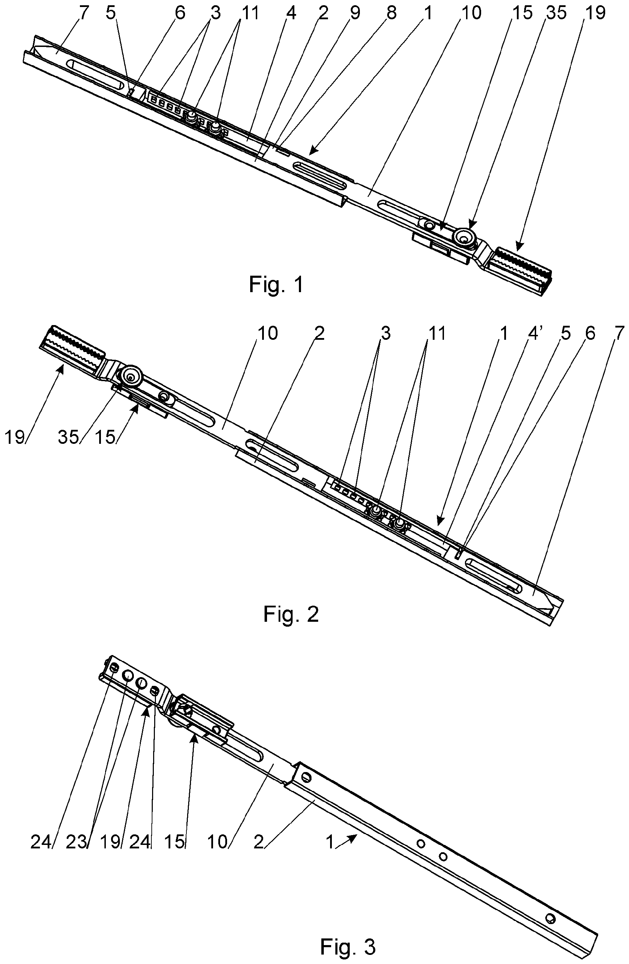

Ein Beschlag gemäß den Fig. 1 bis 3 weist einen U-förmigen Träger 1 auf. An den Innenseiten der Schenkel 2 des Trägers 1 gleiten mit Durchbrüchen 3 versehene Schubstangen 4, 4', die mit Zahnritzeln 11 kämmen, die über eine nicht dargestellte Handhabe betätigbar sind. Dabei verschieben sich die beiden Schubstangen 4, 4' in einander entgegengesetzten Richtungen.

Die Schubstange 4' weist an ihrem einen Ende einen nach innen gerichteten Haken 5 auf, der in eine Nut 6 eines Riegels 7 eingreift. Die Schubstange 4 ist mit einer Ausnehmung 8 versehen, die an einer Längsseite in einem Endbereich angeordnet ist und in die ein Ansatz 9 einer Treibstange 10 eingreift.

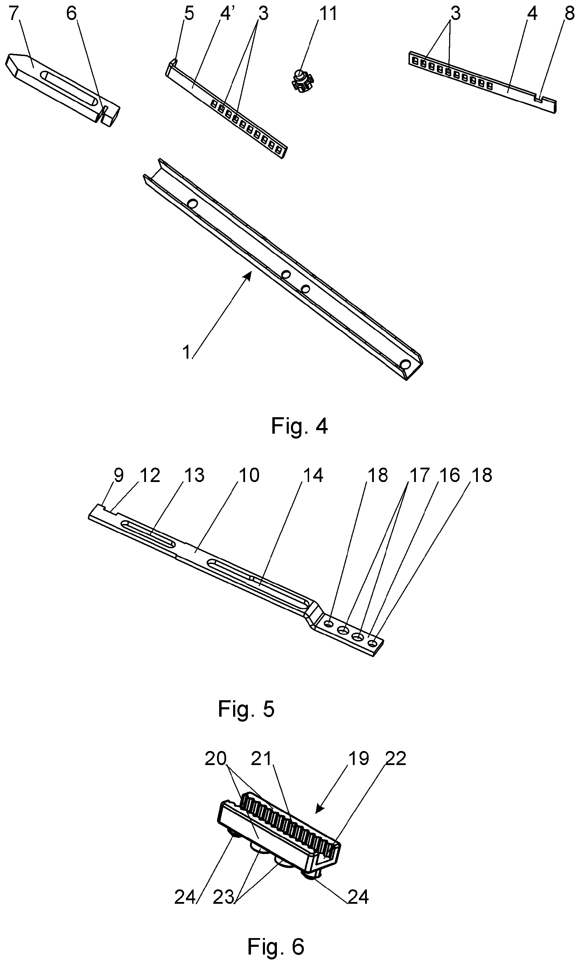

Die Einzelteile des Beschlags nach den Fig. 1 bis 3 sind in den Fig. 4 und 5 dargestellt.

Die Treibstange 10 weist wie erwähnt einen Ansatz 9 auf, der in die Ausnehmung 8 der Schubstange 4 eingreift, wobei die Treibstange 10 eine Freistellung 12 aufweist, die an den Ansatz 9 unmittelbar anschließt und in die der Abschnitt der Schubstange 4 eingreift, der zwischen der Ausnehmung 8 und dem Ende der Schubstange 4 liegt.

Die Treibstange 10 weist Durchbrüche 13, 14 auf, von denen der Durchbruch 14 zur Aufnahme bzw. Vorrats-Halterung eines Verbinders 15 zur Verbindung zweier Teile eines Stulps dient. Weiters weist die Treibstange 10 eine Auskröpfung 16 auf, in deren Bereich zwei mittlere, größere Bohrungen 17 und zwei kleinere Bohrungen 18 vorgesehen sind. Diese dienen zur Befestigung eines erfindungsgemäßen Verbindungselementes 19.

Dieses Verbindungselement 19 weist einen U-förmigen Querschnitt auf, wobei die Innenseiten der Schenkel 20 mit Verzahnungen 21 versehen sind. Von der Außenseite des Steges 22 ragen zwei entlang der Mittellinie angeordnete volle Zapfen 23 auf, sowie zwei Befestigungszapfen 24, die einen kleineren Durchmesser aufweisen und mit an deren Stirnseiten randoffenen Schlitzen 25 versehen sind. Weiters weisen die Befestigungszapfen 24 an deren freien Enden Auskragungen 26 auf. Diese übergreifen im in die Bohrungen 18 eingesteckten Zustand die Ränder der Bohrungen 18 der Auskröpfung 16 der Treibstange 10. Beim Einstecken des Verbindungselementes 19 in die Bohrungen 17, 18 werden die Befestigungszapfen 24 federnd etwas zusammengedrückt und kehren nach dem vollständigen Einstecken federnd wieder weitgehend in ihre ursprüngliche Form zurück, wobei die Auskragungen 26 der Befestigungszapfen 24 über die Ränder der Bohrungen 18 greifen und damit das Verbindungselement 19 auch in Richtung senkrecht zur Treibstange 10 fixieren. Zur Übertragung von Schubkräften dienen die Zapfen 23, die in die Bohrungen 17 eingreifen.

Die Verbindungselemente 19 dienen zur Verbindung der Treibstange 10 mit einem weiteren Bauteil, z.B. einem Riegel oder einer Verlängerung der Treibstange 10, der bzw. die einen Ansatz mit einer Außenverzahnung aufweist und daher in unterschiedlichen Lagen zum Verbindungselement 19 in dieses eingesetzt werden kann, wobei die Verzahnungen miteinander kämmen. Dadurch ist auch ein Ausgleich von Toleranzen auf einfache Weise möglich.

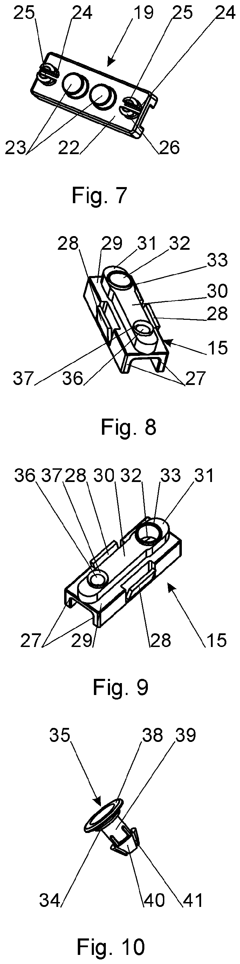

Die Fig. 8 und 9 zeigen einen Verbinder 15, der zur Verbindung zweier Teile eines Stulps 42, 42' dient. Dieser Verbinder 15 ist im Wesentlichen U-förmig ausgebildet. Die Innenseiten seiner Schenkel 27 sind glatt ausgebildet. Im Mittelteil der Schenkel 27 stehen von diesen Zungen 28 ab, die im freien Randbereich der Schenkel 27 mit diesen verbunden sind. Diese Zungen werden beim Einsetzen in eine Nut z.B. eines Rahmens eines Fensterflügels zusammengedrückt und halten den Verbinder 15 in dieser Nut aufgrund der Reibung.

Vom Steg 29 des Verbinders 15 ragt ein länglicher Ansatz 30 nach oben ab. Dieser weist eine Verbreiterung 31 auf. Im Bereich dieser Verbreiterung 31 ist eine Bohrung 32 angeordnet, die einen Kragen 33 aufweist. Im Bereich des Ansatzes 30 ist eine weitere Bohrung 36 mit gegenüber der Bohrung 32 kleinerem Durchmesser vorgesehen. Diese weist einen Kragen 37 auf. Diese Bohrung 36 dient zur Aufnahme einer Schraube. Die beiden Krägen dienen zur Positionierung des Stulps, sodass die Bohrungen 32 und 36 mit der Bohrung 43 bzw. dem Loch 44 fluchten.

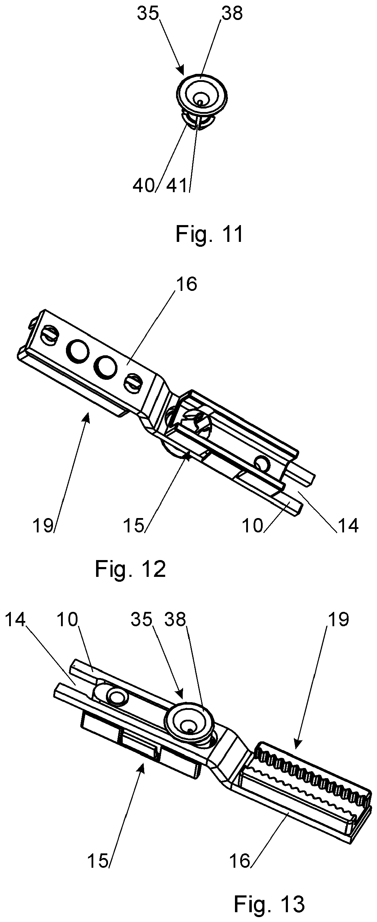

Für die vorläufige Aufnahme des Verbinders 15 ist ein Durchbruch 14 in der Treibstange 10 vorgesehen, in den der Ansatz 30 des Verbinders 15 eingreift. Zur lösbaren Sicherung des Verbinders 15 in dem Durchbruch 14 der Treibstange 10 ist ein Dübel 35 (Fig. 10, 11) vorgesehen, der zu einem Teil seiner Länge in die Bohrung 32 des Verbinders 15 eingesteckt ist und dessen Kopf einen die Breite des Durchbruchs 14 übersteigenden Durchmesser aufweist.

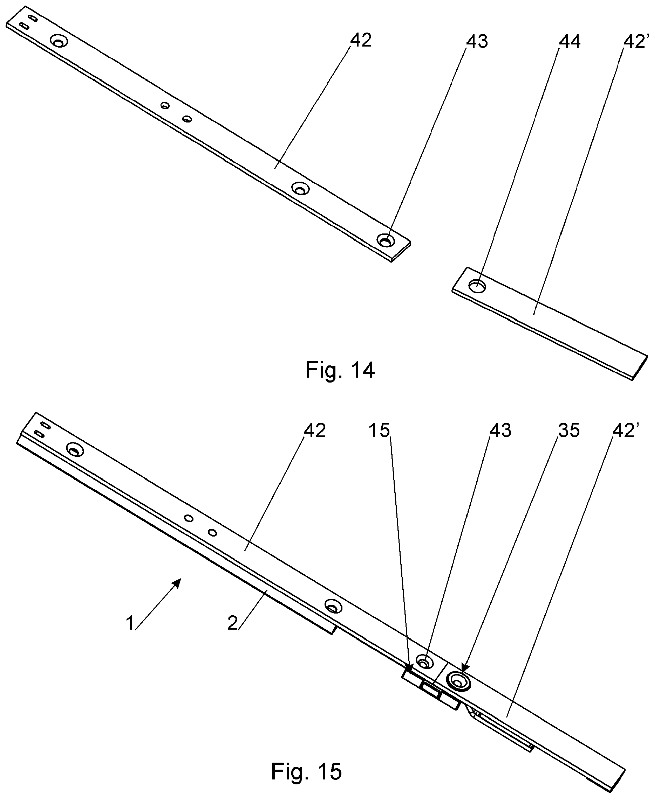

Der Dübel 35 weist unterhalb des Kopfes 38 einen Ansatz 34 auf, dessen Durchmesser kleiner als jener des Kopfes 38, aber größer als jener des Schaftes 39 ist. Der Schaft 39 weist im Bereich seines freien Endes eine kegelstumpfförmige Verdickung 40 auf. Die Basis dieser Verdickung ist dem Kopf 38 zugekehrt. Der Abstand zwischen der Basis der Verdickung 40 und der Unterseite des Kopfes 38 entspricht dabei der Dicke des Stulps 42' plus dem Abstand zwischen der Außenseite des Ansatzes 30 von der Unterseite des Steges 29 (vgl. Fig. 15).

Der Schaft 39 des Dübels 35 ist mit zwei senkrecht zueinander stehenden diagonal verlaufenden Schlitzen 41 versehen, die sich über die Verdickung 40 in den glatten Teil des Schaftes 39 hinein erstrecken. Diese Schlitze 41 ermöglichen beim Einsetzen des Dübels 35 ein Zusammendrücken der Verdickung 40. Nach dem vollständigen Einstecken des Dübels 35 in die Bohrung 32 des Verbinders 15 entspannt sich die Verdickung wieder und greift über die Ränder der Bohrung 32 an der Unterseite des Steges 29 hinaus und hält somit den Stulp 42' am Verbinder 15, wobei der Verbinder 15 zuvor mit dem Stulp 42 verschraubt wurde.

Die Fig. 14 und 15 zeigen schematisch die Verwendung des Verbinders 15 zum Verbinden zweier Teile eines Stulps 42, 42'. Dabei weist der Stulp 42 in seinem einen Endbereich eine mit einer Ansenkung versehene Bohrung 43 auf. Der Durchmesser der Bohrung 43 entspricht dabei zweckmäßigerweise dem Durchmesser der Bohrung 36 des Verbinders 15. Diese Bohrung 43 samt Senkung kann werkseitig hergestellt werden. Der Verlängerungsteil 42' wird mittels einer Stanze auf die erforderliche Länge zugeschnitten, wobei gleichzeitig das Loch 44 gestanzt wird. Eine Ansenkung kann mittels einer kleinen, handbetätigten Stanze jedoch nicht hergestellt werden, dazu reichen die Kräfte nicht aus. Dieses Loch 44 weist einen Durchmesser auf, der im Wesentlichen dem Ansatz 34 des Dübels 35 entspricht. Gleichzeitig wird Raum geschaffen, in den der Kopf 38 des Dübels 35 beim Anziehen einer in den Dübel 35 eingesetzten Schraube eingepresst werden kann. Dadurch ergeben sich nahezu die gleichen Verhältnisse wie bei einer angesenkten Bohrung und es wird ein Vorstehen des Kopfes der Schraube vermieden.

Soll ein Stulp 42 verlängert werden, dann wird zunächst der Verbinder 15 unter den Stulp 42 geschoben und mit einer in die fluchtenden Bohrungen 43 und 36 eingesetzten Schraube fixiert. Danach hält man einfach den weiteren Teil des Stulps 42' hin, setzt den Dübel 35 in das Loch 44 ein und drückt ihn mit seinem Schaft in die Bohrung 32 des Verbinders 15, bis die Verdickung 40 einschnappt und die Basis der Verdickung 40 den Rand der Bohrung 32 an der Innenseite des Steges 29 übergreift. Damit ist der weitere Stulp 42' vorläufig fixiert. Nun wird in den Dübel 35 eine Schraube eingesetzt und angeschraubt, sodass der Stulp 42' zuverlässig fixiert ist. Der gesamte Vorgang kann (infolge der vorläufigen Fixierung) leicht von einer Person ausgeführt werden, und es ist wegen des Dübels 35 nicht notwendig, das Loch 44 mit einer Ansenkung zu versehen.

## Patentansprüche

1. Treibstange (10) mit einem Verbindungselement (19) zur Verbindung der Treibstange (10) mit einem mit einer Verzahnung versehenen Element, z.B. eines Riegels oder einer Verlängerung der Treibstange (10), für einen Riegelbeschlag eines Fensters oder einer Tür, wobei das Verbindungselement (19) im Querschnitt U-förmig ausgebildet und an den Innenseiten der Schenkel (20) mit einer Verzahnung (21) versehen ist und vom Steg (22) nach außen zumindest zwei Zapfen (23) abstehen, die in Bohrungen (17) der Treibstange (10) eingreifen, **dadurch gekennzeichnet, dass** in den den Querrändern des Verbindungselementes (19) nahen Bereichen je ein Befestigungszapfen (24) absteht, der einen an dessen freier Stirnseite offenen Schlitz (25) aufweist und dessen freies Ende mit einer Auskragung (26) versehen ist, wobei jeder Befestigungszapfen (24) eine Bohrung (18) der Treibstange (10) durchsetzt und mit seiner Auskragung (26) übergreift.

2. Treibstange nach Anspruch 1, **dadurch gekennzeichnet, dass** das Verbindungselement (19) aus Kunststoff hergestellt ist.

3. Treibstange nach Anspruch 1 oder 2, **dadurch gekennzeichnet, dass** die Befestigungszapfen (24) in Längsrichtung des Verbindungselementes (19) geschlitzt sind.

## Claims

1. A drive rod (10) having a connecting element (19) for connecting the drive rod (10) to an element of, for example, a lock bolt or a prolongation of the drive rod (10), the element being provided with teeth and being for a lock bolt fitting of a window or a door, the connecting element (19) being U-shaped in cross-section and being provided with teeth (21) on the inner sides of the limbs (20) and at least two spigots (23) protruding outwardly from the web (22), which spigots engage into holes (17) in the drive rod (10), **characterized in that** in the regions near to the transverse ends of the connecting element (19), there protrudes in each case a securing spigot (24), which has an open slit (25) at its free end face and the free end of which is provided with an outwardly extending collar portion (26), each securing spigot (24) penetrating through a hole (18) of the drive rod (10) and engaging over the rod by way of its outwardly extending collar (26).

2. A drive rod according to Claim 1, **characterized in that** the connecting element (19) is made of a plastics material.

3. A drive rod according to Claim 1 or 2, **characterized in that** the securing spigot (24) is slit in the longitudinal direction of the connecting element (19).

## Revendications

1. Tringle (10) pourvue d'un élément de liaison (19) permettant de relier la tringle (10) à un élément qui comporte une denture et qui appartient, par exemple, à un verrou ou à un prolongement de la tringle (10), destinée à une ferrure à verrou équipant une fenêtre ou une porte, l'élément de liaison (19) étant réalisé de manière à présenter, en coupe transversale, une forme en U et à comporter une denture (21) aux faces intérieures des branches (20) et à ce qu'au moins deux ergots (23) s'étendent depuis la partie formant pont (22) vers l'extérieur pour se loger dans les trous (17) de la tringle (10), **caractérisée en ce que,** dans chacune des zones à proximité des bords transversaux de l'élément de liaison (19), s'étend un ergot de fixation (24) lequel est pourvu d'une fente (25) ouverte sur la face frontale de ce dernier et lequel présente, à son extrémité libre, une saillie (26), chacun des ergots de fixation (24) s'étendant à travers un trou (18) de la tringle (10) de manière à ce que sa saillie (26) vienne en prise sur l'arrière de celui-ci.

2. Tringle selon la revendication 1, **caractérisée en ce que** l'élément de liaison (19) est réalisé en matière plastique.

3. Tringle selon les revendications 1 ou 2, **caractérisée en ce que** les ergots de fixation (24) présentent une fente s'étendant dans la direction longitudinale de l'élément de liaison (19).
